(19) Europäisches Patentamt
European Patent Office
Office européen des brevets

(11) **EP 4 405 222 B1**

(12) **EUROPÄISCHE PATENTSCHRIFT**

(45) Veröffentlichungstag und Bekanntmachung des Hinweises auf die Patenterteilung:
**15.07.2026  Patentblatt 2026/29**

(21) Anmeldenummer: **22761232.2**

(22) Anmeldetag: **08.08.2022**

(51) Internationale Patentklassifikation (IPC):
**B60W 30/09** (2012.01)    **B60W 30/095** (2012.01)
**B60W 40/09** (2012.01)    **B60W 30/18** (2012.01)

(52) Gemeinsame Patentklassifikation (CPC):
**B60W 30/09; B60W 30/0953; B60W 30/0956;**
**B60W 30/18159;** B60W 2540/043; B60W 2540/229

(86) Internationale Anmeldenummer:
**PCT/EP2022/072221**

(87) Internationale Veröffentlichungsnummer:
**WO 2023/046356 (30.03.2023 Gazette 2023/13)**

(54) **VERFAHREN ZUR ANSTEUERUNG EINES FAHRASSISTENZSYSTEMS, ENTHALTEND EINE AUSWAHL EINER REAKTION AUF EINE VERKEHRSSITUATION**

METHOD FOR ACTUATING A DRIVER ASSISTANCE SYSTEM, INCLUDING SELECTING A RESPONSE TO A TRAFFIC SITUATION

PROCÉDÉ D'ACTIONNEMENT D'UN SYSTÈME D'AIDE À LA CONDUITE, COMPORTANT LA SÉLECTION D'UNE RÉPONSE À UNE SITUATION DE CIRCULATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **23.09.2021  DE 102021210596**

(43) Veröffentlichungstag der Anmeldung:
**31.07.2024  Patentblatt 2024/31**

(73) Patentinhaber: **Robert Bosch GmbH**
**70442 Stuttgart (DE)**

(72) Erfinder:
• **STOLL, Martin**
**71272 Renningen (DE)**
• **DESIES, Adrien**
**77694 Kehl (DE)**

(56) Entgegenhaltungen:
DE-A1- 102010 006 214    JP-A- H09 270 098
US-B1- 7 124 027

**Beschreibung**

Die vorliegende Erfindung betrifft Fahrassistenzsysteme und Systeme für das zumindest teilweise automatisierte Fahren, die die Verkehrssituation eines Fahrzeugs sensorisch erfassen.

Stand der Technik

Fahrassistenzsysteme und Systeme für das zumindest teilweise automatisierte Fahren können einen menschlichen Fahrer eines Fahrzeugs ganz oder teilweise von Routineaufgaben entlasten und/oder die Fahrt gegen Flüchtigkeitsfehler des Fahrers absichern. So können diese Systeme die Aktorik des Fahrzeugs zumindest teilweise an Stelle des Fahrers ansteuern. Sollte das System hierbei an seine Grenzen stoßen, kann der Fahrer aufgefordert werden, die Kontrolle über das Fahrzeug wieder zu übernehmen. Aus der DE 10 2014 212 596 A1 ist ein automatisiertes Fahrsystem bekannt, das die Reaktionszeit des Fahrers automatisch bestimmt und den Fahrer erst dann zur Übernahme der Kontrolle auffordert, wenn dies unter Berücksichtigung der ermittelten Reaktionszeit wirklich erforderlich ist.

Aus der DE 10 2010 006214 A1 ist Notbremsassistent zum automatischen Abbremsen eines Fahrzeugs zur Kollisionsvermeidung oder Kollisionsfolgenminderung mit einem detektierten Kollisionsobjekt bekannt, wobei zu einem ermittelten Eingriffszeitpunkt ein Bremssystem des Fahrzeugs automatisch derart angesteuert wird, dass eine Kollision mit dem detektierten Kollisionsobjekt vermieden oder zumindest die Kollisionsfolgen gemindert werden können. Die Erfindung zeichnet sich dadurch aus, dass der Eingriffszeitpunkt in Abhängigkeit vom Endzeitpunkt einer ermittelten Fahrerreaktionszeit und vom ermittelten letztmöglichen Bremszeitpunkt ermittelbar ist.

Offenbarung der Erfindung

Im Rahmen der Erfindung wurde ein Verfahren zur Ansteuerung eines Fahrassistenzsystems oder eines Systems für das zumindest teilweise automatisierte Fahren entwickelt. Dieses System kann ständig in die Aktorik des Fahrzeugs eingreifen. Das System kann aber auch beispielsweise ein Kollisionsvermeidungssystem sein, das die Fahrt im Normalbetrieb passiv überwacht und erst dann einschreitet, wenn eine gefährliche Situation erkannt wird.

Im Rahmen des Verfahrens werden Messdaten bereitgestellt, die eine Verkehrssituation des Fahrzeugs charakterisieren. Diese Messdaten können beispielsweise durch Überwachung des Fahrzeugumfelds mit einem oder mehreren Sensoren erhalten werden.

Es werden mehrere Kandidaten-Reaktionen auf die Verkehrssituation ermittelt. Diese Reaktionen beinhalten jeweils eine Ansteuerung des Fahrassistenzsystems, bzw. des Systems für das zumindest teilweise automatisierte Fahren, oder eine Unterdrückung einer derartigen Ansteuerung.

Der Katalog der möglichen Reaktionen richtet sich hierbei nach dem konkreten anzusteuernden System. So kann beispielsweise bei einem System für das zumindest teilweise automatisierte Fahren die Trajektorienplanung für das Fahrzeug so abgeändert werden, dass eine möglicherweise gefährliche Verkehrssituation sich zum Ungefährlicheren hin entwickelt. Bei einem System, das mehr Beteiligung des Fahrers vorsieht, wie etwa einem Kollisionsvermeidungssystem (etwa Front Collision Avoidance, FCA), ist ein erweiterter Katalog von Kandidaten-Reaktionen, die insbesondere nach ihrer Intensität gestaffelt sein können, vorteilhaft. Die Kandidaten-Reaktionen können beispielsweise

- die Ausgabe einer Warnung über eine für den Fahrer des Fahrzeugs wahrnehmbare physikalische Warneinrichtung, gegebenenfalls mit progressiv steigender Dringlichkeit und/oder Intensität; und/oder
- die Vorbereitung des Fahrzeugs auf ein Bremsmanöver und/oder ein Ausweichmanöver, beispielsweise durch "Vorspannen" der Bremse oder der Servolenkung; und/oder
- die Einleitung eines Bremsmanövers und/oder eines Ausweichmanövers umfassen. Eine Kandidaten-Reaktion kann aber auch beispielsweise darin bestehen, nichts zu unternehmen und die weitere Entwicklung der Verkehrssituation zu beobachten.

Für jede der Kandidaten-Reaktionen wird unter Heranziehung einer Verteilung $V(\tau)$ von Reaktionszeiten $\tau$ eines Fahrers des Fahrzeugs eine Bewertungszahl ermittelt, die angibt, wie gefahrgeneigt sich die Verkehrssituation nach Vornahme der jeweiligen Kandidaten-Reaktion entwickelt.

Unter Heranziehung dieser Bewertungszahlen wird eine der Kandidaten-Reaktionen als auszuführende Reaktion ausgewählt. Das Fahrassistenzsystem, bzw. das System für das zumindest teilweise automatisierte Fahren, wird dahingehend angesteuert, dass es die ausgewählte Reaktion ausführt.

Hierbei bezeichnet "ansteuern" jede Kommunikation mit dem Fahrassistenzsystem bzw. mit dem System für das zumindest teilweise automatisierte Fahren, die kausal dafür ist, dass das System die ausgewählte Reaktion ausführt. Darunter fällt auch beispielsweise, in einem System, das intern mit einer Vermeidungsbeschleunigung oder mit einer maximal möglichen Beschleunigung rechnet, diese Werte zu ändern, um eine bestimmte ausgewählte Reaktion auszulösen.

Es wurde erkannt, dass gerade die Berücksichtigung einer Verteilung $V(\tau)$ von Reaktionszeiten $\tau$ des Fahrers bewirkt, dass die letztendlich ausgelöste Reaktion mit einer höheren Wahrscheinlichkeit der Verkehrssituation angemessen ist. Diese Verteilung $V(\tau)$ von Reaktionszeiten $\tau$ ist stark fahrerindividuell und kann in vielfältiger Weise auf die Entscheidung wirken, welche Kandidaten-Reaktion wann am sinnvollsten ist. So kann es beispielsweise in einem Kollisionsvermeidungssystem sinnvoll sein, dem Fahrer zunächst eine Chance zu geben, die Situation eigenständig zu bewältigen, und erst dann eine Warnung auszugeben oder in die Fahrdynamik des Fahrzeugs einzugreifen, wenn der Fahrer diese Chance nicht wahrnimmt. Eine längere Reaktionszeit $\tau$ des Fahrers kann hier also tendenziell die Wirkung haben, dass eine Warnung oder ein anderer Eingriff erst später erfolgt. Auf der anderen Seite bewirkt eine längere Reaktionszeit $\tau$ des Fahrers, dass sich etwa nach einer Warnung die Verkehrssituation zunächst noch länger zuspitzen kann, bevor der Fahrer hierauf reagiert.

Da ein Unfall unbedingt zu vermeiden ist, wird in herkömmlichen Systemen häufig vom ungünstigsten Fall in Sachen Reaktionszeit $\tau$ ausgegangen. Es wird daher vergleichsweise niederschwellig gewarnt und/oder eingegriffen. Dies kann zur Folge haben, dass der Fahrer bereits mit einer Warnung oder einem Eingriff in die Fahrdynamik konfrontiert wird, bevor er selbst reagieren kann. Ein solches Verhalten kann schnell vom Fahrer als irritierend empfunden werden mit der Folge, dass er das entsprechende Assistenzsystem irgendwann abschaltet. Weiterhin kann beispielsweise auch eine Bremsung insgesamt zu heftig ausfallen, wenn in dem Moment, indem ein Kollisionsvermeidungssystem bremst, gleichzeitig auch der Fahrer auf die Bremse tritt.

Daher werden sowohl der Fahrkomfort als auch die Sicherheit durch die zusätzliche Berücksichtigung der Verteilung $V(\tau)$ von Reaktionszeiten $\tau$ verbessert. Die Berücksichtigung einer Verteilung an Stelle eines Einzelwerts trägt in diesem Zusammenhang dem Umstand Rechnung, dass Reaktionszeiten $\tau$ grundsätzlich einer Streuung unterliegen. Weiterhin ist aus einer derartigen Verteilung $V(\tau)$ auch gut abschätzbar, mit welcher Wahrscheinlichkeit unter der Prämisse, dass schon ein gewisser Betrag an Reaktionszeit verstrichen ist, noch eine Reaktion des Fahrers zu erwarten ist.

In einer besonders vorteilhaften Ausgestaltung hängt die Bewertungszahl mindestens einer Kandidaten-Reaktion von einem Maß für eine Prognose

- der Wahrscheinlichkeit $p_c$, dass der Fahrer des Fahrzeugs eine in der Verkehrssituation vorhandene Gefahr bereits erfasst hat und von sich aus abzuwenden vermag; und/oder
- der Wahrscheinlichkeit $p_r$, dass der Fahrer des Fahrzeugs eine in der Verkehrssituation vorhandene Gefahr noch erfassen und abwenden wird; und/oder
- der Wahrscheinlichkeit c, dass das Fahrzeug ausgehend von der Verkehrssituation und der Kandidaten-Reaktion in einen Unfall verwickelt wird,

ab.

Die Wahrscheinlichkeit, dass der Fahrer die Situation von sich aus abzuwenden vermag, kann sich beispielsweise nach einem Maß für die Kritikalität K der Situation richten. Ein solches mögliches Maß für die Kritikalität K, von dem die Bewertungszahl vorteilhaft abhängen kann, ist das Verhältnis einer zur Vermeidung eines Unfalls erforderlichen Vermeidungsbeschleunigung des Fahrzeugs in einer oder mehreren Richtungen zur maximal möglichen Beschleunigung des Fahrzeugs in dieser Richtung. Dieses Maß gibt an, inwieweit die zur Verfügung stehenden Eingriffsmöglichkeiten ausgereizt werden müssen, bzw. inwieweit noch "Luft" ist, wenn die Verkehrssituation weiter eskaliert. Die Kritikalität K ist genau wie eine Wahrscheinlichkeit dimensionslos, so dass beispielsweise $p_c$ näherungsweise als 1-K angegeben werden kann.

Die Wahrscheinlichkeit $p_r$ dafür, dass der Fahrer des Fahrzeugs eine in der Verkehrssituation vorhandene Gefahr noch erfassen und abwenden wird, kann insbesondere beispielsweise von der Verteilung $V(\tau)$ von Reaktionszeiten $\tau$ abhängen:

$$p_r = (1 - p_c) \cdot \Big( 1 - K\big(V(\tau)\big) \Big).$$

Die Verteilung $V(\tau)$ entscheidet also in einer gegebenen Verkehrssituation darüber, wie kritisch diese ist. Beispielsweise kann K von einem Erwartungswert der Verteilung $V(\tau)$ abhängen.

Die Wahrscheinlichkeit c, dass das Fahrzeug ausgehend von der Verkehrssituation und der Kandidaten-Reaktion in einen Unfall verwickelt wird, lässt sich beispielsweise auf $p_c$ und $p_r$ zurückführen:

$$c = 1 - p_c - p_r.$$

In einer gegebenen Verkehrssituation können insbesondere $p_r$ und c von der Kandidaten-Reaktion abhängen. Wenn beispielsweise als Kandidaten-Reaktion eine Verzögerung des Fahrzeugs vorgeschlagen wird, wird hierdurch die Verkehrssituation weniger kritisch. Wenn beispielsweise eine Warnung an den Fahrer ausgegeben wird, kann diese dazu führen, dass der Fahrer mit höherer Wahrscheinlichkeit reagiert und die Gefahr abwenden wird. Die zugehörige Wahrscheinlichkeit $p_r$, und somit die Bewertungszahl mindestens einer Kandidaten-Reaktion, kann somit vorteilhaft von der Wahrscheinlichkeit abhängen, dass der Fahrer auf eine zuvor an ihn ausgegebene Warnung reagiert. Beispielsweise kann sich $p_r$ verändern zu

$$p_r^* = 1 - (1 - p_r) \cdot \Big( l \cdot K\big(V(\tau)\big) + 1 - l \Big),$$

worin für $V(\tau)$ wieder ein Erwartungswert der Verteilung angesetzt werden kann und I die Wahrscheinlichkeit ist, dass der Fahrer des Fahrzeugs auf die zuvor ausgegebene Warnung reagieren wird.

Überflüssige Warnungen und andere Eingriffe werden somit unterdrückt. Stattdessen kann für jeden Eingriff anhand der Bewertungszahl, die etwa von der Unfallwahrscheinlichkeit c abhängen kann, eine Nutzen-Fehler-Abwägung dahingehend gemacht werden, welcher in Verminderung der Unfallwahrscheinlichkeit bemessener Zugewinn von der jeweiligen Kandidaten-Reaktion im Vergleich zu einer Nicht-Reaktion überhaupt erwartet werden kann.

In einer besonders vorteilhaften Ausgestaltung hängt die Bewertungszahl mindestens einer Kandidaten-Reaktion vom Verhältnis einer zur Vermeidung eines Unfalls erforderlichen Vermeidungsbeschleunigung $a_a$ des Fahrzeugs in einer oder mehreren Richtungen zur maximal möglichen Beschleunigung $a_{max}$ des Fahrzeugs in dieser Richtung ab. Dieses Verhältnis kann insbesondere beispielsweise in das Maß für die Kritikalität K der Verkehrssituation eingebracht werden. Wenn beispielsweise das Fahrzeug frontal auf ein Objekt zufährt, kann die Vermeidungsbeschleunigung $a_a$ gemäß

$$a_a = \frac{v_r^2}{2 \cdot d}$$

berechnet werden, wobei $v_r$ die Relativgeschwindigkeit und d der Abstand zwischen dem Fahrzeug und dem Objekt ist. Für Ausweichmanöver hat die Vermeidungsbeschleunigung auch Komponenten, die nicht in der aktuellen Fahrtrichtung verlaufen. Der Begriff der Beschleunigung wird im Interesse der besseren Lesbarkeit hier im Sinne von "betragsmäßige Beschleunigung" verwendet; bei einer Verzögerung handelt es sich natürlich um eine negative Beschleunigung. Wie zuvor erläutert, gibt das Verhältnis von $a_a$ zu $a_{max}$ an, inwieweit der Handlungsspielraum in Bezug auf Beschleunigung ausgereizt werden muss. Insbesondere gibt es bei vollem Ausreizen von $a_{max}$ keinen Spielraum mehr für irgendwelche Unwägbarkeiten, wie etwa einen unerwartet schlechten Reibwert des Reifen-Fahrbahn-Kontakts, der $a_{max}$ verschlechtert.

Zusätzlich kann vorteilhaft in dem besagten Verhältnis noch berücksichtigt werden,

- zu welchen Beschleunigungen $a_F$ des Fahrzeugs der Fahrer des Fahrzeugs prinzipiell in der Lage ist, und/oder
- welche Beschleunigung $a_x$ aktuell auf das Fahrzeug ausgeübt wird,

um so letztlich auch die Bewertungszahl von $a_F$ und/oder $a_x$ abhängig zu machen. So treten beispielsweise insbesondere ungeübte Fahrer häufig zu zaghaft auf das Bremspedal, wodurch die maximal erzielbare Beschleunigung $a_F$ hinter der eigentlich maximal möglichen Beschleunigung $a_{max}$ zurückbleibt. Auch kann ein Teil der maximal möglichen Beschleunigung $a_{max}$ bereits durch eine Beschleunigung $a_x$ ausgeschöpft sein, so dass tatsächlich nur noch eine geringere zusätzliche Beschleunigung zur Verfügung steht.

Die Beschleunigung $a_F$ des Fahrzeugs, zu der der Fahrer des Fahrzeugs in der Lage ist, kann insbesondere beispielsweise zwischen einer Basisbeschleunigung einerseits und einer physikalisch maximal möglichen Beschleunigung des Fahrzeugs andererseits interpoliert werden. Für diese Interpolation kann insbesondere beispielsweise das aktuelle Fahrerverhalten herangezogen werden. Beispielsweise kann ermittelt werden, wie gut es der Fahrer schafft, bei Zielbremsungen, bei denen das Fahrzeug etwa an einer Haltelinie zum Stehen zu bringen ist, die Bremskraft zu dosieren. Wenn der Fahrer hier anfangs deutlich zu zaghaft bremst, ist die Wahrscheinlichkeit dafür erhöht, dass der Fahrer dies auch in einer gefährlichen Situation tun und die maximale Beschleunigung $a_{max}$ nicht erreichen wird.

Erfindungsgemäß wird die Verteilung $V(\tau)$ der Reaktionszeiten $\tau$ aus Zeitdifferenzen zwischen

- Feststellungen einer Gefahr in der Verkehrssituation anhand der Messdaten, und/oder einer Ausgabe einer Warnung an den Fahrer des Fahrzeugs, einerseits und
- Feststellungen einer Reaktion des Fahrers auf die Gefahr, bzw. auf die Warnung, andererseits

ermittelt. Auf diese Weise kann die Verteilung $V(\tau)$ laufend aktuell gehalten werden. Es gibt viele Gründe, warum die Reaktionszeiten $\tau$ schwanken können. Neben der Tagesform und dem Ermüdungszustand des Fahrers kommen hier beispielsweise auch die Tageszeit oder die Art der befahrenen Strecke in Betracht. So kann etwa eine lange monotone Autobahnstrecke ermüdend wirken und die Aufmerksamkeit herabsetzen, wodurch die Reaktionszeit sich tendenziell verlängert.

In Kombination hierzu kann die Verteilung $V(\tau)$ der Reaktionszeiten $\tau$ beispielsweise ermittelt werden, indem ein parametrisierter Ansatz an einen messtechnisch erfassten Zustand, und/oder an ein messtechnisch erfasstes Verhalten, des Fahrers des Fahrzeugs angepasst wird. Beispielsweise sind viele Fahrzeuge bereits mit einer Müdigkeitssensorik ausgestattet, die aus Augenbewegungen und anderen vegetativen Zeichen des Fahrers den Ermüdungszustand des Fahrers ableitet. Somit kann insbesondere beispielsweise mit zunehmender Fahrtdauer, und/oder in Antwort darauf, dass eine Übermüdung des Fahrers des Fahrzeugs messtechnisch festgestellt wird, die Verteilung $V(\tau)$ der Reaktionszeiten $\tau$ zu längeren Reaktionszeiten hin geändert werden.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

Ausführungsbeispiele

Es zeigt:

> Figur 1 Ausführungsbeispiel des Verfahrens 100;
> Figur 2 Beispielhafte Verkehrssituation 51, in der das Verfahren 100 vorteilhaft anwendbar ist.

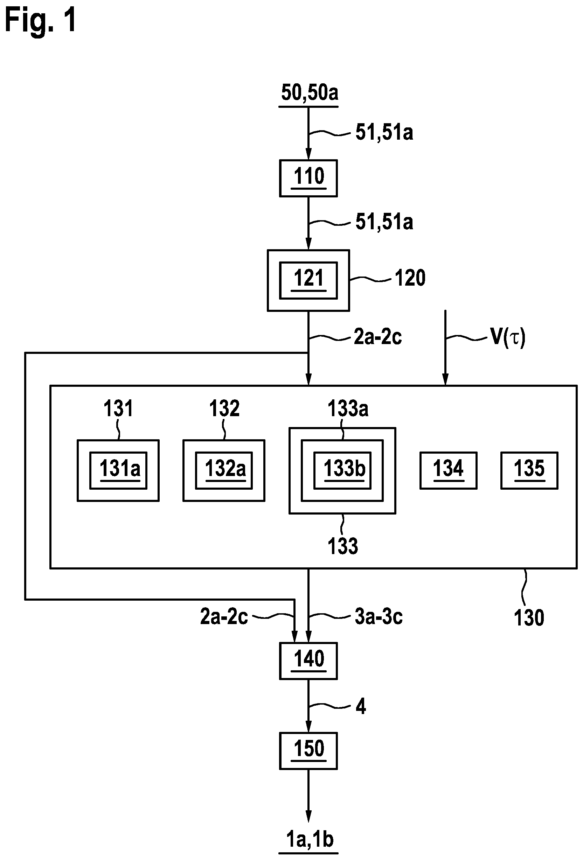

Figur 1 ist ein schematisches Ablaufdiagramm eines Ausführungsbeispiels des Verfahrens 100 zur Ansteuerung eines Fahrassistenzsystems 1a oder eines Systems 1b für das zumindest teilweise automatisierte Fahren.

In Schritt 110 werden Messdaten 51a bereitgestellt, die eine Verkehrssituation 51 eines Fahrzeugs 50 charakterisieren. Die Messdaten können beispielsweise durch Beobachtung des Umfelds 50a des Fahrzeugs 50 mit mindestens einem Sensor erhalten werden.

In Schritt 120 werden mehrere Kandidaten-Reaktionen 2a-2c auf die Verkehrssituation 51 ermittelt. Diese Reaktionen 2a-2c beinhalten jeweils eine Ansteuerung des Fahrassistenzsystems 1a, bzw. des Systems 1b für das zumindest teilweise automatisierte Fahren, oder eine Unterdrückung einer derartigen Ansteuerung.

Gemäß Block 121 können diese Kandidaten-Reaktionen 2a-2c insbesondere beispielsweise

- die Ausgabe einer Warnung über eine für den Fahrer des Fahrzeugs (50) wahrnehmbare physikalische Warneinrichtung; und/oder
- die Vorbereitung des Fahrzeugs (50) auf ein Bremsmanöver und/oder ein Ausweichmanöver; und/oder
- die Einleitung eines Bremsmanövers und/oder eines Ausweichmanövers umfassen.

In Schritt 130 wird für jede Kandidaten-Reaktion 2a-2c unter Heranziehung einer Verteilung $V(\tau)$ von Reaktionszeiten $\tau$ eines Fahrers des Fahrzeugs 50 eine Bewertungszahl 3a-3c ermittelt. Diese Bewertungszahl 3a-3c gibt jeweils an, wie gefahrgeneigt sich die Verkehrssituation 51 nach Vornahme der jeweiligen Kandidaten-Reaktion 2a-2c entwickelt.

Gemäß Block 131 kann diese Bewertungszahl 3a-3c insbesondere beispielsweise von

- der Wahrscheinlichkeit $p_c$, dass der Fahrer des Fahrzeugs 50 eine in der Verkehrssituation 51 vorhandene Gefahr bereits erfasst hat und von sich aus abzuwenden vermag; und/oder
- der Wahrscheinlichkeit $p_r$, dass der Fahrer des Fahrzeugs 50 eine in der Verkehrssituation vorhandene Gefahr noch erfassen und abwenden wird; und/oder
- der Wahrscheinlichkeit $c$, dass das Fahrzeug 50 ausgehend von der Verkehrssituation und der Kandidaten-Reaktion in einen Unfall verwickelt wird,

abhängen.

Gemäß Block 131a kann die Wahrscheinlichkeit, dass der Fahrer des Fahrzeugs 50 eine in der Verkehrssituation vorhandene Gefahr noch erfassen und abwenden wird, von der Verteilung $V(\tau)$ von Reaktionszeiten $\tau$ abhängen.

Gemäß Block 132 kann die Bewertungszahl 3a-3c mindestens einer Kandidaten-Reaktion 2a-2c von der Wahrscheinlichkeit abhängen, dass der Fahrer des Fahrzeugs 50 auf eine zuvor an ihn ausgegebene Warnung reagiert. Diese Wahrscheinlichkeit kann gemäß Block 132a als Integral über die Verteilung $V(\tau)$ von Reaktionszeiten $\tau$ ab der seit Ausgabe der Warnung verstrichenen Zeit ermittelt werden.

Gemäß Block 133 kann die Bewertungszahl 3a-3c mindestens einer Kandidaten-Reaktion 2a-2c vom Verhältnis einer zur Vermeidung eines Unfalls erforderlichen Vermeidungsbeschleunigung $a_a$ des Fahrzeugs in einer oder mehreren Richtungen zur maximal möglichen Beschleunigung $a_{max}$ des Fahrzeugs in dieser Richtung abhängen.

Hierbei kann gemäß Block 133a die Bewertungszahl 3a-3c zusätzlich davon abhängen,

- zu welchen Beschleunigungen $a_F$ des Fahrzeugs 50 der Fahrer des Fahrzeugs 50 prinzipiell in der Lage ist, und/oder
- welche Beschleunigung $a_x$ aktuell auf das Fahrzeug 50 ausgeübt wird.

Gemäß Block 133b kann die Beschleunigung $a_F$ des Fahrzeugs 50, zu der der Fahrer des Fahrzeugs 50 in der Lage ist, zwischen einer Basisbeschleunigung einerseits und einer physikalisch maximal möglichen Beschleunigung des Fahrzeugs 50 andererseits interpoliert werden.

Gemäß Block 134 wird entsprechend Anspruch 1 die Verteilung $V(\tau)$ der Reaktionszeiten $\tau$ aus Zeitdifferenzen zwischen

- Feststellungen einer Gefahr in der Verkehrssituation 51 anhand der Messdaten 51a, und/oder einer Ausgabe einer Warnung an den Fahrer des Fahrzeugs 50, einerseits und
- Feststellungen einer Reaktion des Fahrers auf die Gefahr, bzw. auf die Warnung, andererseits

ermittelt.

Gemäß Block 135 kann die Verteilung V($\tau$) der Reaktionszeiten $\tau$ ermittelt werden, indem ein parametrisierter Ansatz an einen messtechnisch erfassten Zustand, und/oder an ein messtechnisch erfasstes Verhalten, des Fahrers des Fahrzeugs 50 angepasst wird.

In Schritt 140 wird unter Heranziehung der Bewertungszahlen 3a-3c eine der Kandidaten-Reaktionen 2a-2c als auszuführende Reaktion 4 ausgewählt.

In Schritt 150 wird das Fahrassistenzsystem 1a, bzw. das System 1b für das zumindest teilweise automatisierte Fahren, dahingehend angesteuert, dass es die ausgewählte Reaktion 4 ausführt.

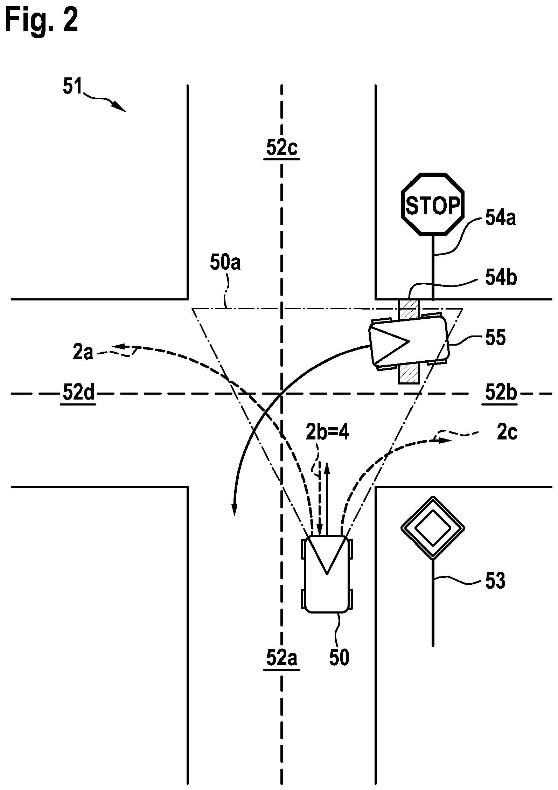

Figur 2 zeigt schematisch eine Verkehrssituation 51, in der sich das zuvor beschriebene Verfahren 100 vorteilhaft einsetzen lässt. Ein mit einem Kollisionsvermeidungssystem als Fahrassistenzsystem 1a ausgestattetes Fahrzeug 50 fährt auf einer Straße 52a auf die Kreuzung mit drei weiteren Straßen 52b, 52c und 52d zu. Die Straße 52a ist eine mit dem Verkehrszeichen 53 gekennzeichnete Vorfahrtstraße. Aus der Straße 52b kommende Fahrzeuge sind durch ein Stoppschild 54a und eine Haltlinie 54b dazu verpflichtet, vor der Kreuzung zu warten.

In der in Figur 2 dargestellten Momentaufnahme hat der Fahrer eines weiteren Fahrzeugs 55 das Stoppschild 54a und die Haltlinie 54b missachtet und fährt in die Kreuzung ein, um nach links in die Straße 52a einzubiegen. Dabei gerät dieses Fahrzeug 55 in den Erfassungsbereich des Fahrzeugs 50. Das Fahrzeug 50 kann also feststellen, dass sich das Fahrzeug 55 auf Kollisionskurs befindet.

In Figur 2 sind drei verschiedene Trajektorien für das Fahrzeug 50 als Kandidaten-Reaktionen 2a-2c eingezeichnet, wobei die Kandidaten-Reaktion 2b einer Vollbremsung entspricht. Kandidaten-Reaktion 2a umfasst Gasgeben und erfordert als zusätzliche Mitwirkung des Fahrers, dass er das Fahrzeug 50 in weitem Bogen in Richtung der Fahrbahn 52d lenkt. Kandidaten-Reaktion 2c umfasst eine mittelstarke Bremsung und erfordert als zusätzliche Mitwirkung des Fahrers, dass er das Fahrzeug 50 in engem Bogen in Richtung der Fahrbahn 52b lenkt.

Bei sofortiger und richtiger Reaktion des Fahrers wäre ein Ausweichen entsprechend den Kandidaten-Reaktionen 2a und 2c jeweils machbar. Die Berücksichtigung der Verteilung V($\tau$) von Reaktionszeiten $\tau$ des Fahrers führt jedoch zum Ergebnis, dass der Fahrer auf ein überraschendes Gasgeben oder eine überraschend nur mittelstarke Bremsung wahrscheinlich zu spät reagieren wird, so dass es entweder zur Kollision mit dem anderen Fahrzeug 55 oder zum Kontrollverlust durch Verreißen des Steuers kommt. Daher wird letztendlich die Vollbremsung 2b als auszuführende Reaktion 4 ausgewählt.

**Patentansprüche**

1. Verfahren (100) zur Ansteuerung eines Fahrassistenzsystems (1a) oder eines Systems (1b) für das zumindest teilweise automatisierte Fahren mit den Schritten:

   - es werden Messdaten (51a) bereitgestellt (110), die eine Verkehrssituation (51) eines Fahrzeugs (50) charakterisieren;
   - es werden mehrere Kandidaten-Reaktionen (2a-2c) auf die Verkehrssituation (51) ermittelt (120), wobei diese Reaktionen (2a-2c) jeweils eine Ansteuerung des Fahrassistenzsystems (1a), bzw. des Systems (1b) für das zumindest teilweise automatisierte Fahren, oder eine Unterdrückung einer derartigen Ansteuerung beinhalten;
   - für jede dieser Kandidaten-Reaktionen (2a-2c) wird unter Heranziehung einer Verteilung V($\tau$) von Reaktionszeiten $\tau$ eines Fahrers des Fahrzeugs (50) eine Bewertungszahl (3a-3c) ermittelt (130), die angibt, wie gefahrgeneigt sich die Verkehrssituation (51) nach Vornahme der jeweiligen Kandidaten-Reaktion (2a-2c) entwickelt, wobei

   die Verteilung V($\tau$) der Reaktionszeiten $\tau$ aus Zeitdifferenzen zwischen

     ○ Feststellungen einer Gefahr in der Verkehrssituation anhand der Messdaten, und/oder einer Ausgabe einer Warnung an den Fahrer des Fahrzeugs, einerseits und

   • Feststellungen einer Reaktion des Fahrers auf die Gefahr, bzw. auf die Warnung, andererseits ermittelt wird (134);
   • unter Heranziehung dieser Bewertungszahlen (3a-3c) wird eine der Kandidaten-Reaktionen (2a-2c) als auszuführende Reaktion (4) ausgewählt (140); und
   • das Fahrassistenzsystem (1a), bzw. das System (1b) für das zumindest teilweise automatisierte Fahren, wird dahingehend angesteuert (150), dass es die ausgewählte Reaktion (4) ausführt.

2. Verfahren (100) nach Anspruch 1, wobei die Kandidaten-Reaktionen (2a-2c)

   • die Ausgabe einer Warnung über eine für den Fahrer des Fahrzeugs (50) wahrnehmbare physikalische Warneinrichtung; und/oder
   • die Vorbereitung des Fahrzeugs (50) auf ein Bremsmanöver und/oder ein Ausweichmanöver; und/oder
• die Einleitung eines Bremsmanövers und/oder eines Ausweichmanövers umfassen (121).

3. Verfahren (100) nach einem der Ansprüche 1 bis 2, wobei die Bewertungszahl (3a-3c) mindestens einer Kandidaten-Reaktion (2a-2c) von einem Maß für eine Prognose

• der Wahrscheinlichkeit $p_c$, dass der Fahrer des Fahrzeugs (50) eine in der Verkehrssituation (51) vorhandene Gefahr bereits erfasst hat und von sich aus abzuwenden vermag; und/oder
• der Wahrscheinlichkeit $p_r$, dass der Fahrer des Fahrzeugs (50) eine in der Verkehrssituation vorhandene Gefahr noch erfassen und abwenden wird; und/oder
• der Wahrscheinlichkeit c, dass das Fahrzeug (50) ausgehend von der Verkehrssituation und der Kandidaten-Reaktion in einen Unfall verwickelt wird, abhängt (131).

4. Verfahren (100) nach Anspruch 3, wobei die Wahrscheinlichkeit, dass der Fahrer des Fahrzeugs (50) eine in der Verkehrssituation vorhandene Gefahr noch erfassen und abwenden wird, von der Verteilung $V(\tau)$ von Reaktionszeiten $\tau$ abhängt (131a).

5. Verfahren (100) nach einem der Ansprüche 1 bis 4, wobei die Bewertungszahl (3a-3c) mindestens einer Kandidaten-Reaktion (2a-2c) von der Wahrscheinlichkeit abhängt (132), dass der Fahrer des Fahrzeugs (50) auf eine zuvor an ihn ausgegebene Warnung reagiert.

6. Verfahren (100) nach einem der Ansprüche 1 bis 5, wobei die Bewertungszahl (3a-3c) mindestens einer Kandidaten-Reaktion (2a-2c) vom Verhältnis einer zur Vermeidung eines Unfalls erforderlichen Vermeidungsbeschleunigung $a_a$ des Fahrzeugs in einer oder mehreren Richtungen zur maximal möglichen Beschleunigung $a_{max}$ des Fahrzeugs in dieser Richtung abhängt (133).

7. Verfahren (100) nach Anspruch 6, wobei die Bewertungszahl (3a-3c) zusätzlich davon abhängt (133a),

• zu welchen Beschleunigungen $a_F$ des Fahrzeugs (50) der Fahrer des Fahrzeugs (50) prinzipiell in der Lage ist, und/oder
• welche Beschleunigung $a_x$ aktuell auf das Fahrzeug (50) ausgeübt wird.

8. Verfahren (100) nach Anspruch 7, wobei die Beschleunigung $a_F$ des Fahrzeugs (50), zu der der Fahrer des Fahrzeugs (50) in der Lage ist, zwischen einer Basisbeschleunigung einerseits und einer physikalisch maximal möglichen Beschleunigung des Fahrzeugs (50) andererseits interpoliert wird (133b).

9. Verfahren (100) nach einem der Ansprüche 1 bis 8, wobei die Verteilung $V(\tau)$ der Reaktionszeiten $\tau$ ermittelt wird, indem ein parametrisierter Ansatz an einen messtechnisch erfassten Zustand, und/oder an ein messtechnisch erfasstes Verhalten, des Fahrers des Fahrzeugs (50) angepasst wird (135).

10. Verfahren (100) nach Anspruch 9, wobei mit zunehmender Fahrtdauer, und/oder in Antwort darauf, dass eine Übermüdung des Fahrers des Fahrzeugs (50) messtechnisch festgestellt wird, die Verteilung $V(\tau)$ der Reaktionszeiten $\tau$ zu längeren Reaktionszeiten hin geändert wird (135a).

11. Computerprogramm, enthaltend maschinenlesbare Anweisungen, die, wenn sie auf einem Computern ausgeführt werden, den Computer dazu veranlassen, das Verfahren (100) nach einem der Ansprüche 1 bis 10 auszuführen.

12. Maschinenlesbarer Datenträger und/oder Downloadprodukt mit einem Computerprogramm nach Anspruch 11.

13. Computer mit einem Computerprogramm nach Anspruch 11, und/oder mit einem maschinenlesbaren Datenträger und/oder Downloadprodukt nach Anspruch 12.

**Claims**

1. Method (100) for actuating a driving assistance system (1a) or a system (1b) for at least partially automated driving, comprising the following steps:

• measurement data (51a) characterizing a traffic situation (51) of a vehicle (50) are provided (110);
• multiple candidate responses (2a-2c) to the traffic situation (51) are determined (120), wherein these responses (2a-2c) each include actuating the driving assistance system (1a) or the system (1 b) for at least partially automated driving, or suppressing such actuation;
• a score (3a-3c) is determined (130) for each of these candidate responses (2a-2c) using a distribution $V(\tau)$ of response times $\tau$ of a driver of the vehicle (50), which score indicates how dangerously the traffic situation (51) develops after the respective candidate response (2a-2c) has been performed, wherein the distribution $V(\tau)$ of the response times $\tau$ is determined (134) from time differences between

○ assessments of a hazard in the traffic situation on the basis of the measurement data, and/or an issuing of a warning to the driver of the vehicle, on the one hand, and

• assessments of a driver's response to the hazard or warning, on the other hand;
• one of the candidate responses (2a-2c) is selected (140) as the response to be performed (4) using these scores (3a-3c); and
• the driving assistance system (1a) or the system (1b) for at least partially automated driving is actuated (150) in such a way that it executes the selected response (4).

2. Method (100) according to Claim 1, wherein the candidate responses (2a-2c) include (121)

• issuing a warning via a physical warning device that can be observed by the driver of the vehicle (50); and/or
• preparing the vehicle (50) for a braking and/or evasive manoeuvre; and/or
• initiating a braking manoeuvre and/or an evasive manoeuvre.

3. Method (100) according to one of Claims 1 to 2, wherein the score (3a-3c) of at least one candidate response (2a-2c) depends (131) on a measure of a prediction of:

• the probability $p_c$ that the driver of the vehicle (50) has already perceived a hazard in the traffic situation (51) and is able to avert it by themselves; and/or
• the probability $p_r$ that the driver of the vehicle (50) will still perceive and avert a hazard in the traffic situation; and/or
• the probability c that the vehicle (50) is involved in an accident based on the traffic situation and the candidate response.

4. Method (100) according to Claim 3, wherein the probability that the driver of the vehicle (50) will still perceive and avert a hazard in the traffic situation depends (131a) on the distribution $V(\tau)$ of response times $\tau$.

5. Method (100) according to one of Claims 1 to 4, wherein the score (3a-3c) of at least one candidate response (2a-2c) depends (132) on the probability that the driver of the vehicle (50) responds to a warning previously issued to them.

6. Method (100) according to one of Claims 1 to 5, wherein the score (3a-3c) of at least one candidate response (2a-2c) depends (133) on the ratio of an avoidance acceleration $a_a$ of the vehicle, required to avoid an accident, in one or more directions, to the maximum possible acceleration $a_{max}$ of the vehicle in the direction.

7. Method (100) according to Claim 6, wherein the score (3a-3c) additionally depends (133a) on

• the accelerations $a_F$ of the vehicle (50) of which the driver of the vehicle (50) is capable in principle, and/or
• the acceleration $a_x$ currently applied to the vehicle (50).

8. Method (100) according to Claim 7, wherein the acceleration $a_F$ of the vehicle (50) of which the driver of the vehicle (50) is capable is interpolated (133b) between a basic acceleration on the one hand and a physically maximum possible acceleration of the vehicle (50) on the other hand.

9. Method (100) according to one of Claims 1 to 8, wherein the distribution $V(\tau)$ of the response times $\tau$ is determined by adapting (135) a parameterized approach to a metrologically captured state, and/or to a metrologically captured behaviour, of the driver of the vehicle (50).

10. Method (100) according to Claim 9, wherein the distribution $V(\tau)$ of the response times $\tau$ is changed (135a) toward longer response times with increasing travel time, and/or in response to fatigue of the driver of the vehicle (50) being metrologically determined.

11. Computer program, containing machine-readable instructions which, when executed on a computer, cause the computer to carry out the method (100) according to any of Claims 1 to 10.

12. Machine-readable data carrier and/or download product comprising a computer program according to Claim 11.

13. Computer comprising a computer program according to Claim 11 and/or comprising a machine-readable data carrier and/or download product according to Claim 12.

**Revendications**

1. Procédé (100) de commande d'un système d'aide à la conduite (1a) ou d'un système (1b) de conduite au moins partiellement automatisée, comprenant les étapes consistant à :

• fournir (110) des données de mesure (51a) qui caractérisent une situation de circulation (51) d'un véhicule (50) ;

• déterminer (120) une pluralité de réponses candidates (2a-2c) à la situation de circulation (51), lesquelles réponses (2a-2c) comportent chacune la commande du système d'aide à la conduite (1a) ou du système (1b) de conduite au moins partiellement automatisée, ou la suppression d'une telle commande ;

• pour chacune de ces réponses candidates (2a-2c), en utilisant une distribution $V(\tau)$ de temps de réponse $\tau$ d'un conducteur du véhicule (50), déterminer (130) un indice d'évaluation (3a-3c) qui spécifie la dangerosité de développement de la situation de circulation (51) après que les réponses candidates respectives (2a-2c) ont été effectuées, dans lequel la distribution $V(\tau)$ des temps de réponse $\tau$ est déterminée (134) à partir de différences de temps entre

  ∘ d'une part, des constatations d'un danger dans la situation de circulation sur la base des données de mesure et/ou la délivrance d'un avertissement au conducteur du véhicule, et

• d'autre part, des constatations d'une réponse du conducteur au danger ou à l'avertissement ;

• en utilisant ces indices d'évaluation (3a-3c), sélectionner (140) l'une des réponses candidates (2a-2c) en tant que réponse (4) à mettre en œuvre ; et

• commander (150) le système d'aide à la conduite (1a) ou le système (1b) de conduite au moins partiellement automatisée de telle sorte qu'il mette en œuvre la réponse sélectionnée (4).

2. Procédé (100) selon la revendication 1, dans lequel les réponses candidates (2a-2c) comprennent (121)

  • la délivrance d'un avertissement via un dispositif d'avertissement physique perceptible par le conducteur du véhicule (50) ; et/ou

  • la préparation du véhicule (50) à une manœuvre de freinage et/ou à une manœuvre d'évitement ; et/ou

  • le déclenchement d'une manœuvre de freinage et/ou d'une manœuvre d'évitement.

3. Procédé (100) selon l'une quelconque des revendications 1 à 2, dans lequel l'indice d'évaluation (3a-3c) d'au moins une réponse candidate (2a-2c) dépend (131) d'une mesure pour un pronostic

  • de la probabilité $p_c$ que le conducteur du véhicule (50) ait déjà détecté un danger présent dans la situation de circulation (51) et soit capable de l'éviter de sa propre initiative ; et/ou

• de la probabilité $p_r$ que le conducteur du véhicule (50) détecte et évite encore un danger présent dans la situation de circulation ; et/ou

• de la probabilité c que le véhicule (50) soit impliqué dans un accident sur la base de la situation de circulation et de la réponse candidate.

4. Procédé (100) selon la revendication 3, dans lequel la probabilité que le conducteur du véhicule (50) détecte et évite encore un danger présent dans la situation de circulation dépend (131a) de la distribution $V(\tau)$ des temps de réponse $\tau$.

5. Procédé (100) selon l'une quelconque des revendications 1 à 4, dans lequel l'indice d'évaluation (3a-3c) d'au moins une réponse candidate (2a-2c) dépend (132) de la probabilité que le conducteur du véhicule (50) réagisse à un avertissement qui lui a été précédemment délivré.

6. Procédé (100) selon l'une quelconque des revendications 1 à 5, dans lequel l'indice d'évaluation (3a-3c) d'au moins une réponse candidate (2a-2c) dépend (133) du rapport entre une accélération d'évitement $a_a$ du véhicule dans une ou plusieurs directions, nécessaire pour éviter un accident, et l'accélération maximale possible $a_{max}$ du véhicule dans cette direction.

7. Procédé (100) selon la revendication 6, dans lequel l'indice d'évaluation (3a-3c) dépend en outre (133a)

  • des accélérations $a_F$ du véhicule (50) que le conducteur du véhicule (50) peut en principe accepter, et/ou

  • de l'accélération $a_x$ qui est actuellement exercée sur le véhicule (50).

8. Procédé (100) selon la revendication 7, dans lequel l'accélération $a_F$ du véhicule (50), que le conducteur du véhicule (50) peut accepter, est interpolée (133b) entre une accélération de base d'une part et une accélération physiquement maximale possible du véhicule (50) d'autre part.

9. Procédé (100) selon l'une quelconque des revendications 1 à 8, dans lequel la distribution $V(\tau)$ des temps de réponse $\tau$ est déterminée en adaptant (135) une approche paramétrée à un état détecté par technique de mesure, et/ou à un comportement détecté par technique de mesure, du conducteur du véhicule (50).

10. Procédé (100) selon la revendication 9, dans lequel, avec une durée de conduite croissante, et/ou en réponse au fait qu'une fatigue excessive du conducteur du véhicule (50) est constatée par technique de mesure, la distribution $V(\tau)$ des temps de réponse $\tau$ est modifiée (135a) vers des temps de réponse plus longs.

**11.** Programme informatique comprenant des instructions lisibles par machine qui, lorsqu'elles sont exécutées sur un ordinateur, amènent l'ordinateur à mettre en œuvre un procédé (100) selon l'une quelconque des revendications 1 à 10.

**12.** Support de données lisible par machine et/ou produit à télécharger comportant un programme informatique selon la revendication 11.

**13.** Ordinateur comportant un programme informatique selon la revendication 11 et/ou comportant un support de données lisible par machine et/ou un produit à télécharger selon la revendication 12.

# Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014212596 A1
- DE 102010006214 A1